Europäisches Patentamt

European Patent Office

Office européen des brevets

(19)

(11) Veröffentlichungsnummer : **0 446 236 B1**

# (12) EUROPÄISCHE PATENTSCHRIFT

(45) Veröffentlichungstag der Patentschrift :
08.02.95 Patentblatt 95/06

(51) Int. Cl.⁶ : **G02C 7/10**

(21) Anmeldenummer : **89912968.8**

(22) Anmeldetag : **07.11.89**

(86) Internationale Anmeldenummer :
**PCT/EP89/01329**

(87) Internationale Veröffentlichungsnummer :
**WO 90/05321 17.05.90 Gazette 90/11**

(54) **LICHTFILTER ZUR VERBESSERUNG DES SEHENS.**

(30) Priorität : **08.11.88 DE 3837884**

(43) Veröffentlichungstag der Anmeldung :
**18.09.91 Patentblatt 91/38**

(45) Bekanntmachung des Hinweises auf die
Patenterteilung :
**08.02.95 Patentblatt 95/06**

(84) Benannte Vertragsstaaten :
**AT BE CH DE FR GB IT LI NL SE**

(56) Entgegenhaltungen :
**EP-A- 0 311 290**
**WO-A-88/02871**
**DE-A- 3 532 780**
**US-A- 4 470 673**
**FIRMENSCHRIFT "PURCHASING INFORMA-
TION", MELLES GRIOT B.V. 1975, Seite 120**

(73) Patentinhaber : **MUTZHAS, Maximilian
Friedrich
Fleischmannstrasse 7
D-81479 München (DE)**
Patentinhaber : **ZIGMAN, Seymour
Fleischmannstrasse 7
D-81479 München (DE)**

(72) Erfinder : **MUTZHAS, Maximilian Friedrich
Fleischmannstrasse 7
D-81479 München (DE)**
Erfinder : **ZIGMAN, Seymour
Fleischmannstrasse 7
D-81479 München (DE)**

(74) Vertreter : **Patentanwälte Viering & Jentschura
Postfach 22 14 43
D-80504 München (DE)**

EP 0 446 236 B1

## Beschreibung

Die Erfindung betrifft einen Lichtfilter aus Kunststoff, der sich entweder im Bereich des Auges befindet oder das Licht filtert ehe es in das Gesichtsfeld gelangt.

Bei vielen Menschen, insbesondere bei älteren, bilden sich in der Hornhaut bzw. in der Linse des Auges Störungen in bezug auf die Lichttransmission aus. Diese häufig als Katarakte bezeichneten Störungen führen in der Linse zur Streuung des ins Auge einfallenden Lichtes sowie zur Eigenfluoreszenz. Durch diese in der Linse auftretenden Effekte-werden Blendungs- und Überstrahlungserscheinungen ausgelöst, die eine Verminderung von Sehschärfe bzw. Kontrastempfindlichkeit ergeben. Der kurzwellige Spektralbereich des Lichtes wird erheblich stärker gestreut als der längerwellige, außerdem verursacht er die Fluoreszenz in der Linse. Weiterhin beeinträchtigt der kurzwellige Spektralanteil auch das Sehen von Menschen mit netzhautbedingter Sehschwäche.

Bisher wird diese auch als grauer Star bezeichnete krankhafte Veränderung im Auge operativ beseitigt. Dabei wird die Linse chirurgisch entfernt und das Fehlen der Linse bei einem älteren Verfahren durch eine Starbrille korrigiert. Die Gläser dieser Starbrillen weisen eine erhebliche Dioptrienzahl auf, sind dick, schwer und entstellen durch die starken Verzerrungen das Aussehen des Trägers erheblich.

Eine modernere Methode ist die Implantation einer aus Kuststoff gefertigten Linse anstelle der entfernten natürlichen. Auch hier, wie bei der Starbrille, kann das Auge nicht mehr akkomodieren, das heißt, sich auf die unterschiedlichen Entfernungen der Sehobjekte scharf einstellen. Neben der starken physiologischen und psychologischen Belastung wird durch das Fehlen der Akkomodation auch der Sehkomfort gegenüber Normalsichtigen stark beeinträchtigt.

Aus der WO 88/02871 ist einen Sonnenglaslinse mit einem Kantenfilter aus Kunststoff bekannt, mit der horizontal polarisiertes Licht sowie Wellenlängen zwischen 300 und 549 nm selektiv ausgefiltert werden. Die hierzu verwendeten Farbstoffe, wie ein Gemisch von gelbem und orangem Farbstoff oder von orangem und rotem Farbstoff werden in einem Warmtauchverfahren aufgebracht.

Aus der Firmenschrift "Purchasing Information, Melles Griot B.V.1975", insbesondere S. 120, sind Kantenfilter aus Glas bekannt, die jedoch nicht zum Filtern von Licht für das menschliche Auge, sondern für technisch hochwertige Anwendungen vorgesehen sind. Da eine Vielzahl von unterschiedlichen Kantenfiltern offenbart werden, kann keine spezielle Anregung entnommen werden, welche Transmissionseigenschaften für Lichtfilter zum Filtern von Licht für das Auge besonders günstig sind.

Der Erfindung liegt nun die Aufgabe zugrunde, einen Lichtfilter zu schaffen, der sonst notwendige Augenoperationen hinausschiebt oder gar überlüssig macht.

Weiterhin soll sie den Menschen, die an Sehschwäche leiden, ein besseres Sehen ermöglichen, durch Verbesserung der Sehschärfe bzw. der Kontrastempfindlichkeit. So gibt es viele Menschen, die aufgrund verschiedener Augenschäden bzw. Augenfehler nahezu blind sind, deren Sehschwäche auf dem Verlust der Sehschärfe bzw. Kontrastempfindlichkeit beruht.

Außerdem soll sie auch für Menschen mit gesundem Auge erhebliche Vorteile bieten. So soll der psychologisch wertvolle Effekt andauernden Sonnenscheins entstehen, Farbkontrast und räumliches Sehen sollen verbessert werden. Bei Nebel, Regen und Schneetreiben sollen die Sehbedingungen verbessert werden. Diese positiven Effekte sind vor allem für Führer von Land-, Luft- und Wasserfahrzeugen, sowie zum Ausüben und Betrachten von schnellen Sportarten von Vorteil.

Entscheidend ist einerseits, daß der Spektralanteil der Strahlung, dessen Wellenlänge kleiner als 450 nm ist (Ultraviolett, Violett, Blau) ganz oder zumindest teilweise ausgefiltert ist, ehe die Strahlung ins Auge eintrifft. Andererseits muß ein hoher Strahlungsanteil, dessen Wellenlänge größer als 450 nm ist, in das Auge eindringen und die Netzhaut erreichen, um genügend Informationen für einen hohen Sehkomfort zu liefern.

Die praktische Lösung wird grundsätzlich auf zwei verschiedenen Wegen erreicht:

1. Die Strahlung wird unmittelbar vor dem Eintritt in das Auge gefiltert.
2. Die Strahlung wird vor Eintritt in das Gesichtsfeld gefiltert.

Im ersten Fall erfolgt die Filterung in einer Kontaktlinse, einer Brille bzw. einem Vorhänger, der an der Brille befestigt ist.

Im zweiten Fall wird das in den Raum einfallende Tageslicht im Bereich der Eintrittstelle (z.B. Fenster, Oberlicht, Türverglasung) gefiltert. Bei künstlicher Innenraumbeleuchtung wird das Licht im Bereich der Leuchte gefiltert. Bei Fernsehgeräten, Bildschirmgeräten, usw. kann die Filterung des austretenden Lichtes vor oder auf dem Bildschirm erfolgen. Die Filterung kann in diesen Fällen unter anderem auch durch Vorschalten eines Lichtfilters in Folien-, Platten-, oder Gehäuseform bzw. in Form von Lack- bzw. Interferenzschichten erfolgen.

Gemäß der Erfindung wird die Aufgabe durch einen Lichtfilter nach Patentanspruch 1 gelöst.

Bei dem Lichtfilter werden Sehschärfe und Kontrastempfindlichkeit verbessert durch seine mittlere Transmission, die im Spektralbereich von 380 bis 450 nm höchstens 20 %, vorzugsweise höchstens 10 %, weiterhin vorzugsweise höchstens 1 % beträgt und im Spektralbereich von 450 bis 550 nm mindestens 40 %, vorzugsweise mindestens 60 %, weiterhin vorzugsweise mindestens 70 % beträgt.

Eingehende ophtalmologische Untersuchungen haben ergeben, daß bei Patienten die den Lichtfilter benützen, vor allem im Bereich geringer Kontraste eine deutliche Verbesserung des Sehens festzustellen war. Diese Verbesserung war in bezug auf Sehschärfe bzw. Kontrastempfindlichkeit signifikant und reproduzierbar. Außerdem wurde durch die Ausfilterung der blauen und blaugrünen Spektralanteile der psychologisch positive Eindruck permanenten Sonnenscheins hervorgerufen. Letzteres ist auf die gelbe Farbe des Lichtfilters zurückzuführen.

Auf der anderen Seite ergab sich bei den der Erfindung zugrunde liegenden umfangreichen Untersuchungen, daß im Spektralbereich von 550 bis 780 nm eine höhere mittlere Transmission notwendig ist, um zum Farbensehen genügend Informationen auf die Netzhaut zu bringen. Dies gilt vor allem für Innenräume und bei Nacht.

Bevorzugt beträgt deshalb die mittlere Transmission des Lichtfilters im Spektralbereich von 550 bis 780 nm mindestens 45 %, vorzugsweise mindestens 65 %, weiterhin vorzugsweise mindestens 85 %.

Aus weiteren Untersuchungen ergab sich, daß der Spektralanteil von 250 bis 380 nm, der im Ultravioletten liegt, vom Auge fern gehalten werden soll, um das Risiko von Schädigungen und Störungen in Bindehaut, Hornhaut und Linse zu verringern.

Bevorzugt beträgt somit die mittlere Transmission des Lichtfilters im Spektralbereich von 250 bis 380 nm höchstens 10 %, vorzugsweise höchstens 1 %, weiterhin vorzugsweise höchstens 0,1 %.

Im Rahmen der Untersuchungen hat sich weiterhin ergeben, daß in bezug auf Sehkomfort die Werte für die Lichttransmission des Lichtfilters mit denen der mittleren Transmission im Spektralbereich von 450 bis 550 nm verknüpft sind.

Daraus ergibt sich, daß bevorzugt die mittlere Transmission im Bereich von 450 bis 550 nm mindestens das 0,6 fache, vorzugsweise mindestens das 0,7 fach, weiterhin vorzugsweise mindestens das 0,8 fache der Lichttransmission beträgt.

Aus den vorher zitierten Untersuchungen ergab sich weiterhin, daß die Kantenlage des Lichtfilters in einem relativ engen Spektralbereich von etwa 450 bis 550 nm liegen muß, um optimale Wirkungen zu erzielen. Die Kantenlage ist die Stelle auf der zum langwelligen hin ansteigenden Kurve der spektralen Transmission, an der die Hälfte der maximalen Transmission im Bereich von 380 bis 780 nm zu verzeichnen ist.

Somit ergibt sich erfindungsgemäß, daß die Kantenlage wenigstens 450 nm und höchstens 550 nm beträgt.

Neben der Kantenlage, so hat sich aus den Untersuchungen ergeben, spielt auch die Steilheit der Transmissionskurve eine wesentliche Rolle. Ein zu flacher Anstieg der Transmissionskurve würde die angestrebte Wirkung deutlich beeinträchtigen.

Deshalb ergibt sich erfindungsgemäß, daß die Steilheit der Transmissionskurve bei der Wellenlänge der Kantenlage mindestens $1 \% \cdot \text{nm}^{-1}$, vorzugsweise mindestens $2 \% \cdot \text{nm}^{-1}$, weiterhin vorzugsweise mindestens $3 \% \cdot \text{nm}^{-1}$ beträgt.

Die spektralen Transmissionseigenschaften des Lichtfilters werden durch die spektralen Eigenschaften des Grundmaterials und des darin verteilten Filtermaterials bestimmt.

Für die praktische Anwendung im Bereich des Auges kann der Lichtfilter als Kontaktlinse, als Brillen- bzw. als Vorhängerscheibe ausgebildet sein. Ist er als Kontaktlinse ausgebildet, die aus Kunststoff gefertigt ist, so wird das Filtermaterial in das Grundmaterial eingebracht und dort homogen verteilt. Das gleiche gilt für Brillen- bzw. Vorhängerscheiben, die aus Kunststoff gefertigt sind.

Somit ist ein weiteres Merkmal der Erfindung, daß das Filtermaterial bei der Herstellung in den Kunststoff der Kontaktlinse bzw. Brillen- oder Vorhängerscheibe eingebracht und nach der Herstellung dort homogen verteilt ist.

Der Lichtfilter kann in manchen Fällen keine konstante Dicke über seine gesamte Fläche aufweisen. Dies wird vor allem bei zur Korrektur dienenden Kontaktlinsen und Brillenscheiben der Fall sein. Ist das Filtermaterial homogen im Grundmaterial verteilt, so ist die spektrale Transmission, aufgrund der schwankenden Dicke, nicht über die gesamte Fläche gleich. Um diesen Nachteil auszugleichen wird eine Schicht konstanter Dicke mit homogener Flächenkonzentration in bezug auf das Filtermaterial, im Inneren eingebettet bzw. außen aufgebracht. Wird diese Filterschicht im Inneren eingebettet, so kann dies auf verschiedene Art und Weise geschehen. So kann die Filterschicht mit den Deckschichten laminiert werden. Außerdem ist es möglich die Deckschichten und die Filterschicht im Gießverfahren oder durch mehrschichtige Extrusion aufzubauen. Weiterhin kann die Filterschicht als Lack als eine Deckschicht angebracht und die gegenüberliegende als zweite Deckschicht angebracht werden

Eine elegante Methode, so hat sich bei den praktischen Versuchen gezeigt, ist es, die Kontaktlinse bzw.

die Brillenscheibe mit dem Lichtfilter nachträglich einzufärben. Dies kann über einen Lack erfolgen, in dem das Filtermaterial homogen verteilt ist und der auf dem Material der Kontaktlinse bzw. der Brillenscheibe gut haftet. Als günstig haben sich z.B. Lacke auf der Basis Polyvinylchlorid, Acryl, Epoxi, Polyurethan, Polyester und Fluorpolymer erwiesen.

Für den erfindungsgemäßen Zweck kann daher der Lichtfilter eine Lackschicht sein.

In der Praxis hat es sich als günstig erwiesen, wenn die Lackschicht weitgehend kratzfest ist. Sehr gut geeignet für diese Zwecke ist Siloxanlack, der entweder das Filtermaterial enthält oder als zusätzliche Deckschicht, ohne spezielle Filtereigenschaften, aufgebracht wird.

Wenn der Lichtfilter in Form einer Kontaktlinse gefertist ist, in der das Filtermaterial bis zur Oberfläche reicht, kann das Filtermaterial durch die Tränenflüssigkeit gelöst und das Auge irritiert bzw. geschädigt werden. In diesem Falle, so haben die Untersuchungen gezeigt, ist es zweckmäßig, eine Deckschicht aufzubringen die verhindert, daß das Filtermaterial herausgelöst wird.

Für Fälle in denen der Lichtfilter z.B. nicht ständig in Verbindung mit einer Brille getragen werden soll, kann er als Vorhänger ausgebildet sein. Dies ist ein aufsteckbarer Vorsatz, der auch hochklappbar ausgebildet sein kann.

Um ein Zerbrechen der Brillen- bzw. Vorhängerscheibe zu vermeiden, kann diese aus einem Material mit erhöhter Schlagzähigkeit gefertigt sein. Geeignet hierfür sind z.B. Polycarbonat, Celluloseester und Acrylglas mit erhöhter Schlagfestigkeit, die alle den Vorteil des geringen Gewichtes haben, sowie hochtransparente Duroplaste wie CR 39, das stellvertretend für die ganze Stoffgruppe genannt sei.

Als weitere erfindungsgemäße Ausgestaltung weist der Kunstoff, aus dem die Brillen- bzw. Vorhängerscheiben gefertigt sind, eine Schlagzähigkeit von mindestens $15 \text{ kJ} \cdot \text{m}^{-2}$, vorzugsweise mindestens $40 \text{ kJ} \cdot \text{m}^{-2}$, weiterhin vorzugsweise mindestens $65 \text{ kJ} \cdot \text{m}^{-2}$ auf.

Für den Lichtfilter aus Kunststoff sind lösliche organische Farbstoffe sowie organische Pigmente kleinster Teilchgrößen als Filtermaterialien geeignet.

Als lösliche organische Farbstoffe haben sich folgende als geeignet erwiesen: Derivate von Styryl, Chinophtalon, Naphtazin, Pyrazolon, Mono- und Disazo.

Geeignete Pigmente sind: Chinakridone, Isoindolinone mit oder ohne Kobalt- bzw. Kupferkomplexen, Arylamide, Diarylide.

Wenn die löslichen Farbstoffe bzw. Pigmente den ultravioletten Spektralanteil nicht genügend abfiltern, so empfiehlt es sich, Benzotriazole bzw. Benzophenone als zusätzliche Filtermaterialien zu verwenden.

Ein Ausführungsbeispiel der Erfindung ist in der Zeichnung veranschaulicht. Es zeigt:

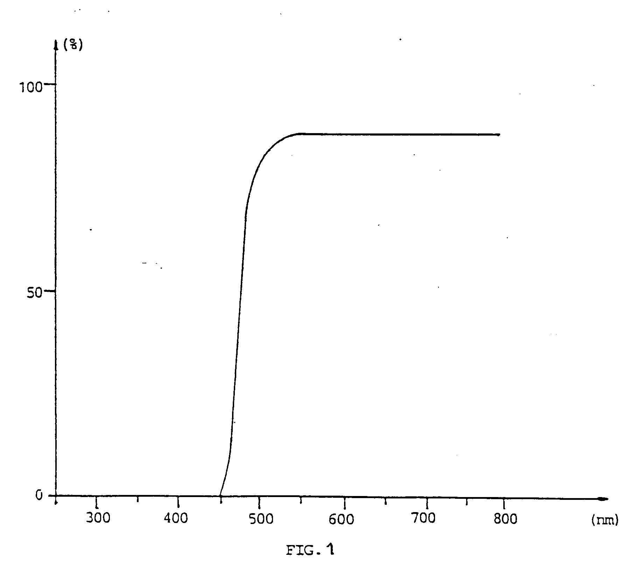

Fig. 1    den spektralen Transmissionsgrad eines aus Kunststoff gefertigten erfindungsgemäßen Lichtfilters.

Der in Fig 1 dargestellte spektrale Transmissionsgrad ($\tau(\lambda)$) gilt für einen 2 mm dicken Lichtfilter aus Polycarbonat, dessen Zusammensetzung und Eigenschaften in Beispiel 1 erläutert sind.

Beispiel 1:

Der Lichtfilter ist eine Scheibe aus Polycarbonat von 2 mm Dicke. Vor dem Spritzgießen wurden 5 % Filtermaterial als Masterbatch SEEMORE YELLOW P01 (Mutzhas Produktions-Gesellschaft mbH, München) dem PC-Granulat zugemischt. Die Kurve $\tau(\lambda)$ zeigt Fig 1. Im einzelnen werden folgende Werte erreicht:

$\tau_1 < 1\ \%$

$\tau_2 < 1\ \%$

$\tau_3 = 63\ \%$

$\tau_4 = 89\ \%$

$\tau_{vis} = 85\ \%$

$\dfrac{\tau_3}{\tau_{vis}} = 0{,}74$

$\lambda_H = 475\ \text{nm}$

$S = 2{,}8\ \% \cdot \text{nm}^{-1}$

Die Schlagzähigkeit dieses Lichtfilters ist größer als $65 \text{ kJ} \cdot \text{m}^{-2}$.

Auf diese Weise lassen sich nicht nur Brillen- oder Vorhängerscheiben herstellen, sondern auch Abdeckungen für Innenraumleuchten. Wird letzteres gemacht, so muß in diesem Raum bei künstlicher Beleuchtung keine Brille oder Kontaktlinse mit Lichtfilter getragen werden.

Beispiel 2:

Zwei farblose Acrylglasplatten (PMMA) sind in einem Rahmen in gegenseitigen Abstand von 1 mm gehalten. In die Zwischenräume wird Methylmethacrylat, das 9 % Filtermaterial SEEMORE YELLOW P02 (Mutzhas Produktions-Gesellschaft mbH, München) enthält, gegossen und anschließend polymerisiert. Aus diesem Sandwich lassen sich dann Brillenscheiben für Korrekturbrillen fertigen. Im einzelnen werden folgende Werte erreicht:

$\tau_1 < 0,1$ %

$\tau_2 < 0,2$ %

$\tau_3 = 70$ %

$\tau_4 = 91$ %

$\tau_{vis} = 86$ %

$\dfrac{\tau_3}{\tau_{vis}} = 0,81$

$\lambda_H = 470$ nm

$S = 2,9$ % . nm$^{-1}$

Auf ähnliche Weise lassen sich unter Verwendung der bekannten Polymere auch weiche und harte Kontaktlinsen herstellen, dabei werden die Zuschlagstoffe SEEMORE YELLOW P03, P04, P05 bzw. P06 (Mutzhas Produktions-Gesellschaft mbH, München) verwendet.

Beispiel 3:

Brillengläser für eine Korrekturbrille werden in einen Lack getaucht, in dem 14 % Filtermaterial SEEMORE YELLOW P07 gelöst sind. Nach dem Trocknen werden folgende Werte erreicht:

$\tau_1 < 0,1$ %

$\tau_2 < 1$ %

$\tau_3 = 65$ %

$\tau_4 = 90$ %

$\tau_{vis} = 85$ %

$\dfrac{\tau_3}{\tau_{vis}} = 0,76$

$\lambda_H = 475$ nm

$S = 2,7$ % · nm$^{-1}$

Beispiel 4:

In das Grundmaterial der Kontaktlinse wird 12 % des Filtermaterials SEEMORE YELLOW P08 (Mutzhas Produktions-Gesellschaft mbH, München) eingearbeitet. Nach der Fertigstellung wird die Kontaktlinse durch Spritzgießen oder Tauchen mit einer Schutzschicht aus dem Grundmaterial überzogen. Dabei werden folgende Werte erreicht:

$\tau_1 < 1$ %

$\tau_2 < 2$ %

$\tau_3 = 64$ %

$\tau_4 = 89$ %

$\tau_{vis} = 85$ %

$\dfrac{\tau_3}{\tau_{vis}} = 0,75$

$\lambda_H = 475$ nm

$S = 2,7$ % · nm$^{-1}$

Beispiel 5:

In das Grundmaterial einer PVC-Folie werden 6 % Filtermaterial SEEMORE YELLOW P09 (Mutzhas Produktions-Gesellschaft mbH, München) eingearbeitet. Dabei werden folgende Werte erreicht:

$\tau_1 < 1$ %

$\tau_2 < 1$ %

$\tau_3 = 59$ %

$\tau_{vis}$ = 85 %

$\frac{\tau_3}{\tau_{vis}}$ = 0,73

$\lambda_H$ = 480 nm

S = 2,7 % · nm$^{-1}$

Diese Folie filtert das durch die Fensterscheiben einfallende Tageslicht, sodaß in diesem Raum bei Tageslichtbeleuchtung keine Brille oder Kontaktlinse mit Lichtfilter getragen werden muß.

Beispiel 6:

Eine extrudierte Acrylglasplatte von 3 mm Dicke enthält 3 % Filtermaterial SEEMORE YELLOW P10 (Mutzhas Produktions-Gesellschaft mbH, München). Im einzelnen werden folgende Werte erreicht:

$\tau_1$ < 0,1 %

$\tau_2$ < 0,2 %

$\tau_3$ = 70 %

$\tau_4$ = 91 %

$\tau_{vis}$ = 86 %

$\frac{\tau_3}{\tau_{vis}}$ = 0,81

$\lambda_H$ = 470 nm

S = 2,9 % · nm$^{-1}$

Wird die Bildröhre eines Farbfernsehers mit diesem Lichtfilter abgedeckt, so kann ferngesehen werden, ohne daß eine Brille oder Kontaktlinse mit Lichtfilter getragen werden muß.

Beispiel 7:

Der Lichtfilter ist eine Sonnenbrille, deren Scheiben aus Polycarbonat bestehen (siehe Beispiel 1). Zusätzlich wird 3 % Neutralfiltermaterial als Masterbatch SEEMORE GRAY P01 (Mutzhas Produktions-Gesellschaft mbH, München) dem PC Granulat zugemischt. Im einzelnen werden folgende Werte erreicht.

$\tau_1$ < 0,02 %

$\tau_2$ < 1 %

$\tau_3$ = 14 %

$\tau_4$ = 20 %

$\tau_{vis}$ = 19 %

$\frac{\tau_3}{\tau_{vis}}$ = 0,74

$\lambda_H$ = 475 nm

S = 2,8 % · nm$^{-1}$

Wesentlich ist hierbei, daß $\tau_3$ mindestens das 5-fache, vorzugsweise mindestens das 10-fache, weiterhin vorzugsweise mindestens das 50-fache von $\tau_2$ beträgt, außerdem sollen die Ansprüche 1, 4, und 5 erfüllt sein. Dies gilt vor allem auch in Hinblick auf das Erkennen von Verkehrssignalfarben. Das Neutralfiltermaterial transmittiert im Wellenlängenbereich von $\tau_4$ weitgehend unabhängig von der Wellenlänge, etwa konstant.

Beispiel 8:

Der Lichtfilter ist eine Sonnenbrille, deren Scheiben aus Polycarbonat bestehen. Vor dem Spritzgießen werden 5 % Filtermaterial als Masterbatch SEEMORE GREEN P01 (Mutzhas Produktions-Gesellschaft mbH, München) dem PC-Granulat zugemischt. Im einzelnen werden dabei folgende Werte erreicht:

$\tau_1$ < 0,01 %

$\tau_2$ < 1 %

$\tau_3$ = 42 %

$\tau_4$ = 60 %

$\tau_{vis}$ = 53 %

$\frac{\tau_3}{\tau_{vis}}$ = 0,79

$\lambda_H$ = 475 nm

S = 1,8 % · nm$^{-1}$

Wurde der in Beispiel 1 beschriebene Lichtfilter benützt, so ergab sich bei Untersuchungen mit älteren Versuchspersonen folgende Veränderung der Sehschärfe (SNELLEN ACUITY), die in 20 Fuß (6,1 m) Entfernung vom Sehobjekt bestimmt wurde.

| Kontrast | ohne Lichtfilter | mit Lichtfilter |
|---|---|---|
| 3 % | 20/180 | 20/99 |
| 10 % | 20/ 65 | 20/49 |

Beispiel 9:

Der Lichtfilter ist eine Scheibe aus Polycarbonat von 2 mm Dicke. Vor dem Spritzgießen wurde etwas weniger als 5% Filtermaterial als Masterbatch Seemore Yellow P01 (Mutzhas Produktions-Gesellschaft mbH, München) dem PC-Granulat zugemischt. Nach dem Spritzgießen wird die Scheibe mit Siloxanlack überzogen. Im einzelnen werden folgende Werte erreicht:

$\tau_1 < 0,1 \%$
$\tau_2 < 1 \%$
$\tau_3 = 63 \%$
$\tau_4 = 90 \%$
$\tau_{vis} = 86 \%$

$$\frac{\tau_3}{\tau_{vis}} = 0,73$$

$\lambda_H = 476$ nm
$S = 2,6 \% \cdot nm^{-1}$

Beispiel 10:

Wird der Lichtfilter nach Beispiel 10 beidseitig durch Bedampfen entspiegelt, so werden folgende Werte erreicht:

$\tau_1 < 0,1 \%$
$\tau_2 < 1 \%$
$\tau_3 = 64 \%$
$\tau_4 = 96 \%$
$\tau_{vis} = 92 \%$

$$\frac{\tau_3}{\tau_{vis}} = 0,70$$

$\lambda_H = 476$ nm
$S = 2,6 \% \cdot nm^{-1}$

Damit ist es erstmal möglich, nach DIN 58216 und DIN 58217 eine derartige Brille für Fahrzeugführer herzustellen, die für die Verwendung bei Tag, in Dämmerung und Nacht diesen Anforderungen entspricht. Gefordert werden $\tau_{vis} > 80\%$ (nach Anmerkung in DIN 58216 $\tau_{vis} > 85\%$). Die relativen Schwächungsquotienten für die Signallichter Rot $Q_{ROT}$, Gelb $Q_{GELB}$, Grün $Q_{GRÜN}$ und Blau $Q_{BLAU}$ müssen $\geqq 0,8$ sein. Erreicht werden die folgenden Werte:

$Q_{ROT} = 0,95$
$Q_{GELB} = 0,97$
$Q_{GRÜN} = 0,90$
$Q_{BLAU} = 0,80$

Beispiel 11:

Der Lichtfilter ist eine Scheibe aus Polycarbonat von 2 mm Dicke. Vor dem Spritzgießen werden knapp 2,5% Filtermaterial als Masterbatch Seemore Yellow P01 (Mutzhas-Produktions-Gesellschaft mbH, München) dem PC-Granulat zugemischt. Nach dem Spritzgießen wird die Scheibe mit Siloxanlack überzogen. Im einzelnen werden folgende Werte erreicht:

$\tau_1 < 0,1 \%$
$\tau_2 < 2 \%$

$\tau_3 = 66\ \%$

$\tau_4 = 90\ \%$

$\tau_{vis} = 87\ \%$

$$\frac{\tau_3}{\tau_{vis}} = 0{,}76$$

$\lambda_H = 468\ nm$

$S = 2{,}6\ \% \cdot nm^{-1}$

$Q_{ROT} = 0{,}89$

$Q_{GELB} = 0{,}92$

$Q_{GRÜN} = 0{,}84$

$Q_{BLAU} = 0{,}80$

Beispiel 12:

Der Lichtfilter ist eine Scheibe aus polymerisiertem Allyl-Diethylen-Glykolcarbonat (ADC) von 2 mm Dicke. Vor dem Polymerisieren werden 5 % Filtermaterial Seemore Yellow P11 (Mutzhas Produktions-Gesellschaft mbH, München) dem Monomer zugemischt. Im einzelnen werden folgende Werte erreicht:

$\tau_1 < 0{,}1\ \%$

$\tau_2 < 1\ \%$

$\tau_3 = 64\ \%$

$\tau_4 = 92\ \%$

$\tau_{vis} = 87\ \%$

$$\frac{\tau_3}{\tau_{vis}} = 0{,}74$$

$\lambda_H = 476\ nm$

$S = 2{,}6\ \% \cdot nm^{-1}$

$Q_{ROT} = 0{,}90$

$Q_{GELB} = 0{,}92$

$Q_{GRÜN} = 0{,}85$

$Q_{BLAU} = 0{,}80$

Beispiel 13:

Wird der Lichtfilter nach Beispiel 12 beidseitig durch Bedampfen entspiegelt, so werden folgende Werte erreicht:

$\tau_1 < 0{,}1\ \%$

$\tau_2 < 1\ \%$

$\tau_3 = 64\ \%$

$\tau_4 = 99\ \%$

$\tau_{vis} = 93\ \%$

$$\frac{\tau_3}{\tau_{vis}} = 0{,}65$$

$\lambda_H = 476\ nm$

$S = 2{,}6\ \% \cdot nm^{-1}$

$Q_{ROT} = 0{,}96$

$Q_{GELB} = 0{,}98$

$Q_{GRÜN} = 0{,}91$

$Q_{BLAU} = 0{,}81$

Zusammenstellung der Formelzeichen

| | |
|---|---|
| $\tau_{(\lambda)}$ | spektraler Transmissionsgrad des Lichtfilters |
| $\tau_1$ | mittlere Transmission des Lichtfilters von 250 bis 380 nm |
| $\tau_2$ | mittlere Transmission des Lichtfilters von 380 bis 450 nm |
| $\tau_3$ | mittlere Transmission des Lichtfilters von 450 bis 550 nm |
| $\tau_4$ | mittlere Transmission des Lichtfilters von 550 bis 780 nm |
| $\tau_{vis}$ | Lichttransmission des Lichtfilters von 380 bis 780 nm bezogen auf Lichtart D 65 |

$\lambda_H$       Kantenlage (nm), Stelle auf der zum langwelligen ansteigenden, spektralen Transmissionskurve, auf der die Hälfte der maximalen Transmission im Bereich von 380 bis 780 nm, zu verzeichnen ist (nm)

S       Kantensteilheit ( $\% \cdot nm^{-1}$), Steilheit der spektralen Transmissionskurve an der Stelle $\lambda_H$

Die Zuschlaggemische bzw. Masterbatches enthalten folgende Komponenten, deren Flächenkonzentration im fertigen Lichtfilter in Klammern angegeben ist.

Seemore Yellow G 01:

Schwefel- (0,01 - 10 $g/m^2$) und/oder Cadmiumsulfid (0,01 - 10 $g/m^2$)

Seemore Yellow P 01 bis P 11, Seemore Gray P 01 und Seemore Green P 01:

Als UV-Absorber Benzotriazole (0,1 - 50 $g/m^2$) und/oder Benzophenone (0,1 - 50 $g/m^2$) sowie lösliche Farbstoffe und/oder Farbpigmente aus den Farbstoffgruppen Antrachinon (0,1 - 5 $g/m^2$), Chinakridon (0,1 - 5 $g/m^2$), Diazo (0,1 - 5 $g/m^2$), Monoazo (0,1 - 5 $g/m^2$), Phtalocyanin (0,1 - 5 $g/m^2$), Pyrazolon (0,1 - 5 $g/m^2$), Ruß (0,1 - 5 $g/m^2$). Die Farbstoffe können einzeln oder in Kombination eingebracht sein.

Als besonders günstig erweist sich eine UV-Absorber-Konzentration von 2 - 5 $g/m^2$ und eine Farbstoffkonzentration von 0,1 - 0,3 $g/m^2$.

## Patentansprüche

1.    Lichtfilter zum Filtern von Licht für das menschliche Auge, der einen Kantenfilter aus Kunststoff aufweist, wobei der Kunststoff Farbstoffe enthält, dadurch gekennzeichnet, daß in dem Kunststoff organische Farbstoffe gelöst und/oder organische Pigmente fein verteilt sind, und daß der Kantenfilter folgende Transmissioneigenschaften aufweist:

     a) eine Kantenlage ($\lambda_H$) von wenigstens 450 nm und höchstens 550 nm, wobei die Kantenlage die Stelle auf der spektralen Transmissionskurve ist, auf der die Hälfte der maximalen Transmission im Bereich von 380 bis 780 nm zu verzeichnen ist,

     b) eine Steilheit (S) der Transmissionskurve bei der Kantenlage ($\lambda_H$) von mindestens 1 $\% \cdot nm^{-1}$,

     c) eine mittlere Transmission ($\tau_2$) im Spektralbereich von 380 bis 450 nm von höchstens 20 %,

     d) eine mittlere Transmission ($\tau_3$) im Spektralbereich von 450 bis 550 nm von mindestens 40 %.

2.    Lichtfilter nach Anspruch 1, dadurch gekennzeichnet, daß die mittleren Transmissionen ($\tau_2$, $\tau_3$) im Spektralbereich von 380 bis 450 nm höchstens 10 %, vorzugsweise höchstens 1 %, und im Spektralbereich von 450 bis 550 nm mindestens 60 %, vorzugsweise mindestens 70 % betragen.

3.    Lichtfilter nach Anspruch 1, dadurch gekennzeichnet, daß seine mittlere Transmission ($\tau_4$) im Spektralbereich von 550 bis 780 nn mindestens 45 %, vorzugsweise mindestens 65 %, weiterhin vorzugsweise mindestens 85 % beträgt.

4.    Lichtfilter nach Anspruch 1, dadurch qekennzeichnet, daß seine mittlere-Transmission ($\tau_1$) im Spektralbereich von 250 bis 380 nm höchstens 10 %, vorzugsweise höchstens 1 %, weiterhin vorzugsweise höchstens 0,1 % beträgt.

5.    Lichtfilter nach Anspruch 1, dadurch gekennzeichnet, daß die mittlere Transmission ($\tau_3$) im Bereich 450 bis 550 nm mindestens das 0,6fache, vorzugsweise mindestens das 0,7fache, weiterhin vorzugsweise mindestens das 0,8fache der Lichttransmission ($\tau_{vis}$) beträgt.

6.    Lichtfilter nach Anspruch 1, dadurch gekennzeichnet, daß die Steilheit (S) der Transmissionskurve bei der Kantenlage ($\lambda_H$) 2 $\% \cdot nm^{-1}$ oder, vorzugsweise, 3 $\% \cdot nm^{-1}$ beträgt.

7.    Lichtfilter nach Anspruch 1, dadurch gekennzeichnet, daß der Kunststoff eine Schlagfestigkeit von mindestens 15 $kJ \cdot m^{-2}$, vorzugsweise mindestens 40 $kJ \cdot m^{-2}$, weiterhin vorzugsweise mindestens 65 $kJ \cdot m^{-2}$ aufweist.

## Claims

1.    Light filter for filtering light for the human eye, comprising a cut-off filter of plastic material containing dyes, characterized in that organic dyes are dissolved and/or organic pigments are finely distributed in the plastic material, and that the cut-off filter has the following transmittance characteristics:

a) a cut-off location ($\lambda_H$) of at least 450 nm and at most 550 nm, wherein the cut-off location is that point on the spectral transmittance curve at which half of the maximum transmittance in the 380 to 780 nm range is registered,

b) a steepness (S) of the transmittance curve at the cut-off location ($\lambda_H$) of at least 1 %·nm$^{-1}$,

c) a mean transmittance ($\tau_2$) in the spectral range from 380 to 450 nm of at most 20%,

d) a mean transmittance ($\tau_3$) in the spectral range from 450 to 550 nm of at least 40%.

2.  Light filter according to claim 1, characterized in that the mean transmittances ($\tau_2$, $\tau_3$) in the 380 to 450 nm spectral range are at most 10 %, preferably at most 1%, and in the 450 to 550 nm spectral range are at least 60 %, preferably at least 70 %.

3.  Light filter according to claim 1, characterized in that its mean transmittance ($\tau_4$) in the 550 to 780 nm spectral range is at least 45 %, preferably at least 65 % and still more preferably at least 85 %.

4.  Light filter according to claim 1, characterized in that its mean transmittance ($\tau_1$) in the 250 to 380 nm spectral range is at most 10 %, preferably at most 1% and still more preferably at most 0.1 %.

5.  Light filter according to claim 1, characterized in that the mean transmittance ($\tau_3$) in the 450 to 550 nm range is at least 0.6 times as much, preferably at least 0.7 times as much and still more preferably at least 0.8 times as much as the light transmittance ($\tau_{vis}$).

6.  Light filter according to claim 1, characterized in that the steepness (S) of the transmittance curve at the cut-off location ($\lambda_H$) is 2 % · nm$^{-1}$ or, preferably, 3 % · nm$^{-1}$.

7.  Light filter according to claim 1, characterized in that the plastic material has an impact resistance of at least 15 kJ · m$^{-2}$, preferably of at least 40 kJ · m$^{-2}$ and still more preferably of at least 65 kJ · m$^{-2}$.

## Revendications

1.  Filtre optique pour filtrer la lumière pour l'oeil humain, comprenant un filtre à coupure brusque en matière plastique, la matière plastique contenant un colorant, caractérisé en ce que des colorants organiques sont dissous et/ou des pigments organiques sont finement dispersés dans la matière plastique, et en ce que le filtre à coupure brusque possède les propriétés de transmission suivantes :

    a) une longueur d'onde de coupure d'au moins 450 nm et d'au plus 550 nm, la longueur d'onde de coupure étant l'endroit de la courbe spectrale de transmission où l'on note la moitié de la transmission maximale relevée dans la plage de 380 à 780 nm,

    b) une pente (S) de la courbe de transmission dans la zone de la longueur d'onde de coupure ($\lambda_H$) d'au moins 1 %·nm$^{-1}$,

    c) une transmission moyenne ($\tau_2$) dans la plage spectrale de 380 à 450 nm d'au plus 20 %,

    d) une transmission moyenne ($\tau_3$) dans la plage spectrale de 450 à 550 nm d'au moins 40 %.

2.  Filtre optique selon la revendication 1, caractérisé en ce que les transmissions moyennes ($\tau_2$, $\tau_3$) sont d'au plus 10 %, de préférence d'au plus 1 %, dans la plage spectrale de 380 à 450 nm et d'au moins 60 %, de préférence d'au moins 70 %, dans la plage spectrale de 450 à 550 nm.

3.  Filtre optique selon la revendication 1, caractérisé en ce que la transmission moyenne ($\tau_4$) dans la plage spectrale de 550 à 780 nm est d'au moins 45 %, de préférence d'au moins 65 %, de façon encore préférée d'au moins 85 %.

4.  Filtre optique selon la revendication 1, caractérisé en ce que sa transmission moyenne ($\tau_1$) dans la plage spectrale de 250 à 380 nm est d'au plus 10 %, de préférence d'au plus 1 %, de façon encore préféreé d'au plus 0,1 %.

5.  Filtre optique selon la revendication 1, caractérisé en ce que la transmission moyenne ($\tau_3$) dans la plage de 450 à 550 nm est d'au moins 0,6 fois, de préférence d'au moins 0,8 fois la transmission en lumière visible ($\tau_{vis}$).

6.  Filtre optique selon la revendication 1, caractérisé en ce que la pente (S) de la courbe de transmission dans la zone de la coupure brusque ($\lambda_H$) est de 2 %·nm$^{-1}$ ou, de préférence de 3 %·nm$^{-1}$.

7. Filtre optique selon la revendication 1, caractérisé en ce que la matière plastique possède une résistance au choc d'au moins 15 kJ·m$^{-2}$, de préférence 40 kJ·m$^{-2}$, de façon encore préférée 65 kJ·m$^{-2}$.

FIG. 1